# EUROPÄISCHE PATENTSCHRIFT

(11) **EP 2 303 663 B1**
(45) Veröffentlichungstag und Bekanntmachung des Hinweises auf die Patenterteilung: **30.04.2014**
(21) Anmeldenummer: 08773937.1
(22) Anmeldetag: 09.07.2008
(51) Int. Cl.: B60W 40/10, G01C 21/16

(54) **VORRICHTUNG UND VERFAHREN ZUR BESTIMMUNG DES FAHRZUSTANDES EINES FAHRZEUGS**
DEVICE AND METHOD FOR DETERMINING THE DRIVING STATE OF A VEHICLE
DISPOSITIF ET PROCÉDÉ DE DÉTERMINATION DE L ÉTAT DE CONDUITE D' UN VÉHICULE

(43) Veröffentlichungstag der Anmeldung: 06.04.2011
(73) Patentinhaber: Munnix, Pascal, 82335 Berg (DE)
(72) Erfinder: Munnix, Pascal, 82335 Berg (DE)
(74) Vertreter: Stammberger, Tobias
(86) Internationale Anmeldenummer: PCT/EP2008/005610
(87) Internationale Veröffentlichungsnummer: WO 2010/003437

(56) Entgegenhaltungen:
- EP-A- 1 096 230
- DE-A1- 10 148 667
- US-A1- 2003 216 865
- US-A1- 2005 065 727
- US-A1- 2005 234 644
- US-A1- 2008 091 351
- US-B1- 6 421 622

## Beschreibung

### GEBIET DER ERFINDUNG

Die Erfindung betrifft allgemein Vorrichtungen und Verfahren zum Erfassen des Fahrzustands eines Fahrzeugs und insbesondere eine Vorrichtung und ein Verfahren zur Bestimmung des Fahrzustands eines Fahrzeugs im dreidimensionalen Raum.

### HINTERGRUND DER ERFINDUNG

Eine wichtige Aufgabe von Fahrdynamikregelsystemen und Kraftfahrzeugsicherheitssystemen ist es, das Fahrzeug in kritischen Situationen, etwa wenn es ins Schleudern gerät, zu stabilisieren. Die ersten serienmäßig eingeführten Systeme zur Lösung dieser Aufgabe waren Antiblockierregelsysteme (ABS) und Antriebsschlupfregelsysteme (ASR), die primär auf das längsdynamische Verhalten des Kraftfahrzeugs wirken. Als grundlegende Erweiterung wurden Fahrdynamikregelsysteme entwickelt, die auch in querdynamisch kritischen Situationen durch geregelte Maßnahmen wie die aktive Bremsung einzelner Räder, Steuerung des Antriebsmoments zur Realisierung von Schlüpfen an den Rädern und/oder durch aktive Lenkung das Verhalten des Fahrzeugs stabilisierend beeinflussen. Solche Systeme sind bspw. das Electronic Stability Program (ESP) oder das Active Front Steering (AFS) zum geregelten Lenkeingriff von BMW.

Allen Fahrdynamikregelsystemen ist gemeinsam, dass sie zunächst den Fahrzustand des Fahrzeugs möglichst genau ermitteln müssen, wozu unter anderem Bewegungssensoren benötigt werden. Je mehr dieser Bewegungsgrößen und Fahrzustandsgrößen bekannt sind, desto besser und zuverlässiger kann grundsätzlich der Fahrzustand ermittelt werden und desto effektiver und sicherer kann einem ungewünschten Verhalten des Fahrzeugs entgegengesteuert werden. Bspw. kann durch zusätzlich bekannte Bewegungsgrößen die Plausibilität des ermittelten Fahrzustandes überprüft werden. Außerdem kann es in außergewöhnlichen Fahrsituationen wie etwa in extremen Steilkurven ohne Verwendung solcher weiterer Bewegungsgrößen gegebenenfalls nicht mehr möglich sein, eine Regelung und damit Stabilisierung des Fahrzeugs sicherzustellen. Hierzu sind jedoch in der Regel weitere Bewegungssensoren notwendig, die die Kosten eines Fahrdynamikregelsystems oder Sicherheitssystems in die Höhe treiben. Darin begründet sich ein grundsätzliches Bestreben der Hersteller solcher Systeme, die Zahl der benötigten Sensorelemente möglichst gering zu halten, zumal es teilweise aus Sicherheitsgründen zumindest für die wichtigsten Bewegungssensoren geboten erscheint, diese redundant auszulegen, so dass zur Messung jeder weiteren Bewegungsgröße zwei Sensorelemente zu den entsprechend erhöhten Kosten verbaut werden müssten.

Es ist bekannt, den Fahrzustand auf Basis von Modellen, wie Beobachter, Reifenmodelle usw., zu bestimmen. In DE 10 2007 047 337 A1 ist bspw. eine Vorrichtung und ein Verfahren offenbart, bei dem unter Verwendung eines Reifenmodells die Quergeschwindigkeit des Fahrzeugs aus der Messung der Querbeschleunigung ermittelt wird. Durch Hinzunehmen von Korrekturgrößen, wie bspw. der Fahrzeuglängsgeschwindigkeit und der Gierrate, kann die Genauigkeit der Berechnung der Quergeschwindigkeit weiter verbessert werden.

Es ist weiterhin bekannt, die direkte Absolutgeschwindigkeit des Fahrzeugs durch ein GPS-Messsystem zu bestimmen, wie es bspw. in DE 101 48 667 C2 offenbart ist. Das GPS-Signal - und damit aus dem GPS-Signal ermittelte Werte, wie die Absolutgeschwindigkeit des Fahrzeugs - unterliegen einer gewissen Zeitverzögerung und sind folglich für Fahrdynamikregelsysteme, die Fahrzustandsinformationen alle 5 bis 25 Millisekunden benötigen, schlecht geeignet. Genaue und schnelle GPS-System, die bspw. mehrere Antennen verwenden, sind nicht nur teuer, sondern weisen trotzdem noch eine gewisse Zeitverzögerung auf. Mehrere Antennen erlauben es zwar, die Orientierung des Fahrzeugs zu bestimmen. Dies bedeutet aber einen höheren Aufwand.

Außerdem ist aus US 2008/0091351 A1 ein Navigationsgerät bekannt, das eine Inertialsensorik verwendet und auch gestörte GPS-Signale für die Positionsbestimmung verwendet.

Das Dokument US2003216865 A1 ist als nächstliegender Stand der Technik zu sehen und zeigt ein Verfahren zur Bestimmung des Fahrzustands eines Fahrzeugs im dreidimensionalen Raum, wobei das Verfahren die Schritte umfasst:
- Erfassen von ersten Signalen über einen bestimmten Zeitraum, die auf ersten Sensorsignalen basieren, die der dreidimensionalen Beschleunigung des Fahrzeugs entsprechen;
- Erfassen von zweiten Signalen über den bestimmten Zeitraum, die auf zweiten Sensorsignalen basieren, die den dreidimensionalen Drehraten des Fahrzeugs entsprechen;
- Ermitteln der Fahrzustandsgrößen dreidimensionale Geschwindigkeit und dreidimensionale Orientierung des Fahrzeugs durch Integration über den bestimmten Zeitraum der ersten Signale und der zweiten Signale gemäß dem Bewegungsgleichungssystem für die entsprechenden Fahrzustandsgrößen;
- Erfassen von einem oder mehreren dritten Signalen, die auf einem oder mehreren zusätzlichen dritten Sensorsignalen von einem Raddrehzahlsensor oder Radgeschwindigkeitssensor basieren, mit denen eine oder mehrere Komponenten der ermittelten Fahrzustandsgrößen bestimmbar sind;
- Korrigieren der ersten und zweiten Signale des bestimmten Zeitraums oder der ermittelten Fahrzustandsgrößen derart, dass die ermittelten Fahrzustandsgrößen den aus den dritten Signalen bestimmten Fahrzustandsgrößen möglichst genau entsprechen;

Vor diesem Hintergrund ist es Aufgabe der vorliegenden Erfindung, Vorrichtungen und Verfahren zur Verfügung zu stellen, die eine Optimierung, insbesondere hinsichtlich Genauigkeit, Sicherheit, Dynamik und Kosten, der Bestimmung des Fahrzustandes des Fahrzeugs erlauben.

### KURZFASSUNG DER ERFINDUNG

Die Erfindung stellt gemäß einem ersten Aspekt ein Verfahren zur Bestimmung des Fahrzustands eines Fahrzeugs im dreidimensionalen Raum zur Fahrdynamikregelung des Fahrzeugs bereit, wobei das Verfahren die Schritte umfasst: Erfassen von ersten Signalen über einen bestimmten Zeitraum, die auf ersten Sensorsignalen basieren, die der dreidimensionalen Beschleunigung des Fahrzeugs entsprechen; Erfassen von zweiten Signalen über den bestimmten Zeitraum, die auf zweiten Sensorsignalen basieren, die den dreidimensionalen Drehraten des Fahrzeugs entsprechen; Ermitteln der Fahrzustandsgrößen dreidimensionale Geschwindigkeit und/oder dreidimensionale Orientierung des Fahrzeugs durch Integration über den bestimmten Zeitraum der ersten Signale und der zweiten Signale gemäß dem Bewegungsgleichungssystem für die entsprechenden Fahrzustandsgrößen; Erfassen von einem oder mehreren dritten Signalen, die auf einem oder mehreren zusätzlichen dritten Sensorsignalen von einem Raddrehzahlsensor oder Radgeschwindigkeitssensor basieren, mit denen eine oder mehrere Komponenten der ermittelten Fahrzustandsgrößen bestimmbar sind; Korrigieren der ersten und zweiten Signale des bestimmten Zeitraums oder der ermittelten Fahrzustandsgrößen derart, dass die ermittelten Fahrzustandsgrößen den aus den dritten Signalen bestimmten Fahrzustandsgrößen möglichst genau entsprechen; und Verwenden der ermittelten Fahrzustandsgrößen zur Fahrdynamikregelung.

Gemäß einem weiteren Aspekt stellt die Erfindung eine Vorrichtung zur Bestimmung des Fahrzustands eines Fahrzeugs im dreidimensionalen Raum zur Fahrdynamikregelung des Fahrzeugs bereit, umfassend: eine Inertialsensorik, die ausgelegt ist, Beschleunigungssignale auszugeben, die der Beschleunigung des Fahrzeugs im dreidimensionalen Raum entsprechen, und Drehratensignale auszugeben, die den Drehraten des Fahrzeugs im dreidimensionalen Raum entsprechen; ein Mittel zum Ermitteln der Fahrzustandsgrößen dreidimensionale Geschwindigkeit und/oder dreidimensionale Orientierung des Fahrzeugs durch Integration über einen bestimmten Zeitraum der Beschleunigungssignale und der Drehratensignale gemäß dem Bewegungsgleichungssystem für die entsprechenden Fahrzustandsgrößen; ein Mittel zum Ausgeben eines oder mehrerer zusätzlicher Sensorsignale, mit denen eine oder mehrere Komponenten der ermittelten Fahrzustandsgrößen bestimmbar sind, wobei das Mittel einen Raddrehzahlsensor oder einen Radgeschwindigkeitssensor umfasst; und ein Korrekturmittel zum Korrigieren der Beschleunigungssignale und Drehratensignale des bestimmten Zeitraums oder der ermittelten Fahrzustandsgrößen derart, dass die ermittelten Fahrzustandsgrößen den aus den zusätzliche Sensorsignalen bestimmten Fahrzustandsgrößen möglichst genau entsprechen, wobei die Vorrichtung dazu ausgelegt ist, die ermittelten Fahrzustandsgrößen an eine Fahrdynamikregelung zu übergeben.

Weitere Merkmale und Aspekte der Erfindung ergeben sich aus den abhängigen Ansprüchen, der nachfolgenden Beschreibung bevorzugter Ausführungsformen und den beigefügten Zeichnungen.

### KURZBESCHREIBUNG DER ZEICHNUNGEN

Die Erfindung wird nun anhand von bevorzugten, beispielhaften Ausführungsformen und der beigefügten beispielhaften Zeichnungen näher erläutert. In den Zeichnungen zeigen:
- Figur 1: eine schematische Darstellung von Fahrzeugbewegungsgrößen;
- Figur 2: eine schematische Darstellung eines Geschwindigkeitsverlaufes eines Fahrzeugs;
- Figur 3: ein Ablaufdiagramm eines Verfahrens gemäß einer bevorzugten Ausführungsform;
- Figur 4: eine schematische Darstellung der Komponenten einer Vorrichtung gemäß einer bevorzugten Ausführungsform.

### BESCHREIBUNG BEVORZUGTER AUSFÜHRUNGSFORMEN

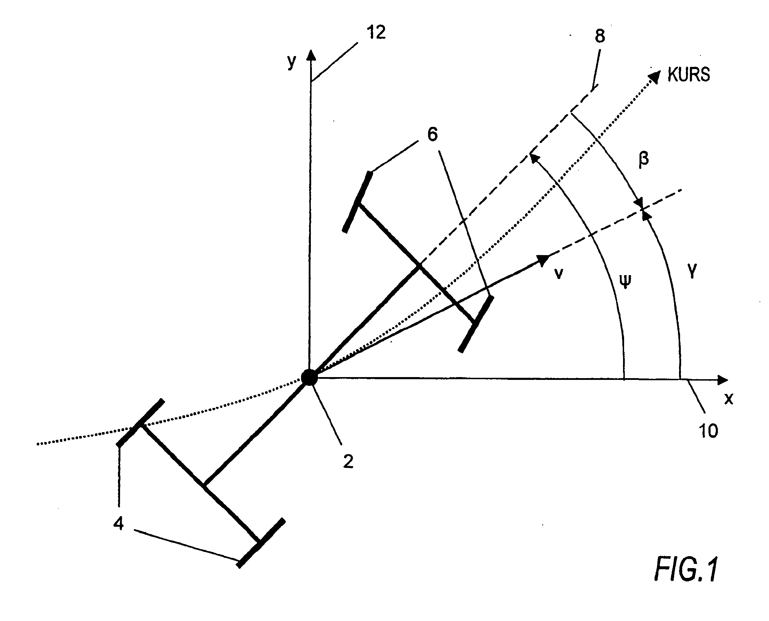

Fig. 1 veranschaulicht den Fahrzustand eines Fahrzeuges und den Schwimmwinkel des Fahrzeugs.

Vor einer detaillierten Beschreibung der Fig. 1 folgen zunächst allgemeine Erläuterungen zu den Ausführungsformen und deren Vorteile.

Für eine präzise und leistungsfähige Funktion benötigen Fahrdynamikregelsysteme (auch Sicherheitssysteme) eine möglichst genaue Kenntnis des Fahrzustands eines Fahrzeugs. Wichtige Größen sind hierbei z.B. die Fahrzeuglängsgeschwindigkeit (zur Radschlupfregelung von ABS, ASR und ESP), der weiter unten erklärte Schwimmwinkel (zur Querdynamikregelung, d.h. bspw. wichtig für das ESP), der Rollwinkel (zur Überschlagsvermeidung) oder die Fahrbahnsteigung (bessere ASR-Funktion).

Folglich umfasst bei manchen Ausführungsformen die Bestimmung des Fahrzustands eines Fahrzeuges die Bestimmung der dreidimensionalen Geschwindigkeit des Fahrzeugs und die (Aus-)Richtung bzw. Orientierung des Fahrzeugs im dreidimensionalen Raum. Unter Fahrzeugen sind in manchen Ausführungsformen alle Fahrzeuge zu verstehen, die sich zu Lande, im Wasser und/oder in der Luft fortbewegen können und nicht nur Kraftfahrzeuge.

Das Ziel bei manchen Ausführungsformen ist es, sechs Unbekannte zu ermitteln, nämlich die Geschwindigkeit in einem dreidimensionalen Raumkoordinatensystem und die Fahrzeugorientierung in diesem Raumkoordinatensystem, sodass der Fahrzustand des Fahrzeugs praktisch vollständig beschrieben werden kann. Zur Lösung des Systems sind mindestens sechs Gleichungen notwendig, die zusammen ein Bewegungsgleichungssystem ergeben.

Zur Bestimmung des Fahrzustands können allgemein bei manchen Ausführungsformen eine Vielzahl von Parameter bzw. Messgrößen dienen, von denen hier nur beispielhaft die Drehgeschwindigkeiten bzw. Drehraten des Kraftfahrzeugs um verschiedene Achsen im Raum, die Beschleunigung, der Lenkwinkel, die vier Radgeschwindigkeiten, das Antriebsmoment oder der Bremsdruck genannt werden, wobei eine bevorzugte Ausführungsform sich insbesondere mit den Messgrößen befasst, die Bewegungsgrößen darstellen. Diese sind bevorzugt die Drehrate im dreidimensionalen Raum (fahrzeuggebunden) und die Beschleunigung des Fahrzeugs im dreidimensionalen Raum (fahrzeuggebunden) und - als Stützgröße - eine Fahrzeuggeschwindigkeit bzw. eine Komponente der Fahrzeuggeschwindigkeit, bspw. in einem erdgebundenen Koordinatensystem oder auch andere Stützgrößen wie: Beschleunigung, Geschwindigkeit, Position, Drehrate und/oder Orientierung des Fahrzeugs im Raum (erdgebunden oder fahrzeuggebunden). Die Fahrzeuggeschwindigkeit wird bei manchen Ausführungsformen durch einen Raddrehzahlsensor, einen Radgeschwindigkeitssensor, ein Radar, oder anhand eines Positions- oder Geschwindigkeitssignals eines globalen Positionierungssystems (GPS) bestimmt, wobei die Fahrzeuggeschwindigkeit direkt als Signal von dem globalen Positionierungssystem bereitgestellt wird oder sich aus der Ableitung der Position ergibt. Es können auch nur einzelne Komponenten der Geschwindigkeit genutzt werden. Das GPS-Geschwindigkeitssignal basiert dabei in der Regel auf der Auswertung des Dopplereffekts. Die bestimmten Fahrzustandsgrößen, wie bspw. die Fahrzeuggeschwindigkeit werden bei manchen Ausführungsformen bevorzugt für Fahrdynamikregelsysteme oder Kraftfahrzeugsicherheitssysteme, wie bspw. Airbagsysteme oder Überschlagserkennungssysteme, verwendet.

Bei den Drehraten handelt es sich bevorzugt um Drehgeschwindigkeiten um die Hauptachsen des Kraftfahrzeugs, also um die Längsachse, die Querachse und die Hochachse, die in der Regel durch den Schwerpunkt des Kraftfahrzeugs verlaufen. Diese an dem orthogonalen Hauptachsen-Koordinatensystem des Kraftfahrzeugs anknüpfenden Bewegungsgrößen können auch als kanonische Bewegungsgrößen bezeichnet. Hinsichtlich der Drehraten beschreibt die sogenannte Gierrate eine Drehung des Kraftfahrzeugs um dessen Hochachse, die Rollrate eine Drehung um die Fahrzeuglängsachse, also ein seitliches Kippen des Fahrzeugs, und die Nickrate eine Drehung um die Fahrzeugquerachse. Hinsichtlich der Beschleunigungswerte des Kraftfahrzeugs, sind dies die Querbeschleunigung, die Längsbeschleunigung und die Vertikalbeschleunigung entsprechend entlang der Quer-, Längs- und Hochachse des Kraftfahrzeugs.

Diese Bewegungsgrößen werden bei den bevorzugten Ausführungsformen mit Hilfe bekannter Sensoren gemessen. Zum Beispiel sind Querbeschleunigungssensoren bekannt, die auf dem Prinzip eines mit einem Kondensator gekoppelten Biegebalkens beruhen, während Gierraten-Sensoren z.B. zur Messung der Drehbewegung den Corioliseffekt ausnutzen.

In der vorliegenden Beschreibung wird der Begriff Sensor im funktionellen Sinne verstanden, d.h. als eine Messeinheit, die eine Bewegungsgröße, d.h. bspw. eine Drehrate oder eine Beschleunigung, entlang einer Richtung im Raum messen kann. In einer bevorzugten Ausführungsform können daher die verwendeten Sensoren als einzelne Sensor-Elemente ausgebildet sein, die jeweils ein eigenständiges Gehäuse, Ansteuerung etc. aufweisen. In einer anderen bevorzugten Ausführungsform sind diese Sensoren in einem sogenannten Sensor-Cluster ausgebildet, das einige oder alle Sensoren der Vorrichtung in einer Einheit zusammenfasst, d.h. die einzelnen Sensor-Elemente sind bspw. in einem Gehäuse untergebracht und können damit auch gemeinsam ein- und ausgebaut werden. Bspw. könnte ein solches Sensor-Cluster als Drehratensensoren Gierraten-, Rollraten- und Nickraten-Sensoren, und als Beschleunigungssensoren Querbeschleunigungs-, Vertikalbeschleunigungs- und Längsbeschleunigungssensoren aufweisen. Weiterhin weist ein solcher Sensor-Cluster bei manchen Ausführungsformen auch einen entsprechenden Sensor zum Empfang von Signalen eines globalen Positionierungssystems (auch GPS genannt) auf, sodass auch eine absolute Geschwindigkeit und/oder Position des Fahrzeugs bestimmt werden kann.

Eine bevorzugte Ausführungsform weist demnach insgesamt sechs Sensoren auf, nämlich drei Drehraten-Sensoren entlang der Hauptachsen des Fahrzeugs auf, und zwar einen Gierraten-Sensor, einen Rollraten-Sensor und einen Nickraten-Sensor, und zusätzlich drei Beschleunigungs-Sensoren, nämlich einen Längs-, Quer- und Vertikalbeschleunigungssensor. Die Zusammenfassung dieser Sensoren wird bei manchen Ausführungsformen auch insgesamt als Intertialsensorik bezeichnet, wodurch die vollständige Erfassung der Beschleunigungs- und Drehratenwerte in einem Inertialsystem des Fahrzeugs zum Ausdruck gebracht wird.

Bei manchen Ausführungsformen ist die Querbeschleunigung des Fahrzeugs wichtig, um den aktuellen Fahrzustand beurteilen zu können, mit der ggf. die sogenannte Schwimmwinkelgeschwindigkeit des Fahrzeugs berechnet wird. Diese Größe ist bei manchen Ausführungsformen wichtig zur Beurteilung der Stabilität von bspw. Kraftfahrzeugen und damit ein wichtiger Parameter für Fahrdynamikregelsysteme. Vereinfacht ausgedrückt entspricht die Schwimmwinkelgeschwindigkeit der Schleudergeschwindigkeit des Kraftfahrzeugs.

Üblicherweise wird der Schwimmwinkel β wie zur Veranschaulichung des Fahrzustands von Fahrzeugen in Fig. 1 dargestellt als Differenz des Gierwinkels ψ und des Kurswinkels γ definiert, wobei der Gierwinkel ψ den Drehwinkel des Fahrzeugs um die Hochachse, also um eine vertikale Achse durch den Fahrzeugschwerpunkt 2, entspricht, und der Kurswinkel γ die Bewegungsrichtung des Schwerpunkts des Kraftfahrzeugs definiert. Der Gierwinkel ψ wird bezüglich einer Koordinatenachse 10, also der x-Achse, gemessen und gibt damit die Winkelstellung der Fahrzeuglängsachse 8 bezüglich dieser Achse 10 an. Der Kurswinkel γ dagegen beschreibt die Ausrichtung des Geschwindigkeitsvektors v des Schwerpunkts 2 des Kraftfahrzeugs, der tangential zum Kurs des Kraftfahrzeugs liegt, bezüglich derselben Koordinatenachse 10. Die Abweichungen dieser beiden Winkel bzw. ihrer Winkelgeschwindigkeiten sind ein Maß für das Driften bzw. Schleudern des Kraftfahrzeugs. Sie sind im Übrigen unabhängig von der Wahl eines speziellen Koordinatensystems 10, 12. Außerdem bezeichnen in Fig. 1 die Bezugszeichen 4 bzw. 6 die Radstellung der Hinter- bzw. Vorderräder.

Neben dem Schwimmwinkels stellt auch der Schräglaufwinkel an der Hinterachse eine sinnvolle Regelgröße dar.

Bisher werden im Stand der Technik, wie eingangs erwähnt, aufwendige Modelle, insbesondere zur Beurteilung der Querbeschleunigung bzw. der Quergeschwindigkeit und damit auch zur Bestimmung des Schwimmwinkels herangezogen. Bei manchen Ausführungsformen hingegen wird eine besonders hochqualitative und exakte Beschreibung des Fahrzustands erreicht, indem der Fahrzustand vollständig beschrieben wird, wodurch die Verwendung von Modellen nicht mehr notwendig ist.

Es wurde erkannt, dass mit Hilfe der Beschleunigungen im dreidimensionalen Raum und der Drehraten des Fahrzeugs im dreidimensionalen Raum der Fahrzustand des Fahrzeugs (vollständig) bestimmt werden kann. Bei manchen Ausführungsformen, die bspw. ein Verfahren zur Bestimmung des Fahrzustands eines Fahrzeugs im dreidimensionalen Raum betreffen, werden folglich erste Signale über einen bestimmten Zeitraum erfasst, die auf ersten Sensorsignalen basieren, die der dreidimensionalen Beschleunigung des Fahrzeugs entsprechen, und zweite Signale den bestimmten Zeitraum erfasst, die auf zweiten Sensorsignalen basieren, die der dreidimensionalen Drehrate des Fahrzeugs entsprechen. Die dreidimensionale Beschleunigung umfasst bspw. die Quer-, Längs- und Vertikalbeschleunigung des Fahrzeugs, die aus entsprechenden Sensorsignalen erhalten werden, d.h. die Sensorsignale sind repräsentativ für die Quer-, Längs- und Vertikalbeschleunigung des Fahrzeugs. Dementsprechend umfasst die dreidimensionale Drehrate die Gierrate, Rollrate und Nickrate des Fahrzeugs und die zweiten Sensorsignale sind folglich repräsentativ für die Gierrate, Rollrate und Nickrate des Fahrzeugs. Damit wird letztlich zum Ausdruck gebracht, dass bei manchen Ausführungsformen aus den Sensorsignalen entsprechende Querbeschleunigungs- bzw. Drehratenkomponenten als erste bzw. zweite Signale abgeleitet werden können, bspw. für jede Raumrichtung eines entsprechenden Koordinatensystems, wie zum Beispiel das Inertialsystem des Fahrzeugs.

Bei manchen Ausführungsformen steht folglich durch Erfassen über einen bestimmten Zeitraum der ersten und zweiten Signale und damit bspw. der Beschleunigungs- und Drehratenwerte im dreidimensionalen Raum des Fahrzeugs, eine sechsdimensionale Beschreibung des Fahrzustands zu einem bestimmten Zeitpunkt zur Verfügung. Daraus lässt sich ein entsprechendes (sechsdimensionales) Bewegungsgleichungssystem ableiten, das die dreidimensionalen Komponenten der Beschleunigung und die dreidimensionalen Komponenten der Drehrate des Fahrzeugs umfasst. Werden nun die einzelnen Messpunkte, d.h. die über die Zeit erhaltenen ersten und zweiten Signale, die auf jeweiligen Sensorsignalen basieren, die der dreidimensionalen Beschleunigung des Fahrzeugs bzw. der dreidimensionalen Drehrate des Fahrzeugs entsprechen, unter der Berücksichtigung der Erdbeschleunigung integriert, bspw. aufsummiert, so wird das "sechsdimensionale" Bewegungsgleichungssystem durch die Integration gelöst und dadurch wird als Fahrzustandsgrößen eine dreidimensionale (Fahrzeug-)Geschwindigkeit (durch Integration der Beschleunigungswerte) und eine dreidimensionale Orientierung des Fahrzeugs (durch Integration der Drehraten) im Raum ermittelt.

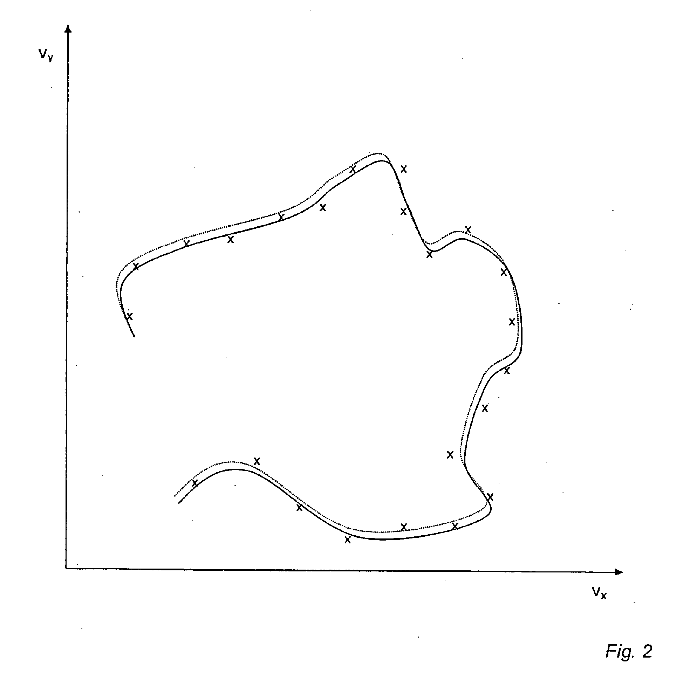

Betrachtet man nun den zeitlichen Verlauf der Geschwindigkeitskomponenten eines Fahrzeugs in der x-Richtung und y-Richtung, die zueinander orthogonal sind, in einer Ebene, so ergibt sich beispielhaft der in Fig. 2, als durchgezogene Linie dargestellte, tatsächliche Geschwindigkeitsverlauf im zweidimensionalen Raum. Beispielhaft ist der durch die Integration erhaltene Verlauf als nicht durchgezogene Linie dargestellt. Wie aus Fig. 2 ersichtlich, besteht eine gewisse Abweichung zwischen tatsächlichem und ermittelten Geschwindigkeitsverlauf des Fahrzeugs. Dies liegt daran, dass sich Messfehler der Sensoren im Laufe der Integration aufsummieren und somit die ermittelte, auf Sensorsignalen beruhende Geschwindigkeit mit der tatsächlichen nicht mehr übereinstimmt. Gleiches gilt auch für die Orientierung des Fahrzeugs im Raum.

Diesem Problem begegnen manche Ausführungsformen, indem sie eine "objektive" Fahrzustandsgröße, bspw. einen "objektiven" Wert der Geschwindigkeit oder eine "objektive" Position, des Fahrzeugs mit berücksichtigen, bspw. eine Geschwindigkeitskomponente oder Positionskomponente des Fahrzeugs. Einen derartiger Wert liefert bspw. das Sensorsignal eines globalen Positionierungssystems, das eine absolute Position - oder je nach Güte des empfangenen Signals - zumindest eine Richtung des Fahrzeugs angibt oder die absolute Geschwindigkeit des Fahrzeugs oder eine Geschwindigkeitskomponente. Selbstverständlich lässt sich auch aus der Ableitung der Position, die von dem Sensorsignal repräsentiert wird, die Geschwindigkeit des Fahrzeugs ermitteln. Bei manchen Ausführungsformen kann auch die "objektive" Fahrzeuggeschwindigkeit mittels eines Sensorsignals eines Raddrehzahlsensors, eines Radegeschwindigkeitssensors, eines Radars oder eines optischen Sensors ermittelt werden und diese als Stütz- bzw. Korrekturgröße verwendet werden. Das heißt es wird ein drittes oder es werden mehrere dritte Signale erfasst, die auf einem oder mehreren zusätzlichen dritten Sensorsignalen basieren, mit denen eine oder mehrere Komponenten der ermittelten Fahrzustandsgrößen bestimmbar sind. Insgesamt kommen bei manchen Ausführungsformen "objektive" bestimmte Fahrzustandsgrößen oder Komponenten davon als Stütz- oder Korrekturgrößen in Betracht, die wenigstens einer der folgenden Größen entsprechen oder aus ihr abgeleitet sind: Beschleunigung, Geschwindigkeit, Position, Drehrate und/oder Orientierung des Fahrzeugs.

In Fig. 2 symbolisieren die Kreuze in der Nähe des tatsächlichen Geschwindigkeitsverlaufs derartige "objektive" Messpunkte, wie sie bspw. aus dem GPS-Sensorsignal gewonnen werden können. Die GPS-Sensorsignale sind unter anderem aufgrund der Signallaufzeit zeitlich versetzt zu dem tatsächlich aktuellen Fahrzustand des Fahrzeugs, d.h. der Messzeitpunkt durch das GPS ist früher als der Zeitpunkt, zu dem man tatsächlich die Position oder den Geschwindigkeitswert erhält. Bei manchen Ausführungsformen wird die durch die Lösung des Bewegungsgleichungssystems erhaltene Geschwindigkeitskomponente des Fahrzeugs mit der entsprechenden Geschwindigkeitskomponente, die durch Erfassung der Sensorsignale erhalten wird, die wenigstens einer Geschwindigkeitskomponente oder Positionskomponente des Fahrzeugs entsprechen, abgeglichen. Daher können die Sensorfehler, die sich im Laufe der Zeit aufsummieren, ausgeglichen werden und der ermittelte Fahrzustand (z.B. dreidimensionale Fahrzeuggeschwindigkeit und dreidimensionale Orientierung des Fahrzeugs im Raum) stimmt nahezu perfekt mit dem tatsächlichen überein. In Fig. 2 würde das bedeuten, dass die gestrichelte Linie auf der durchgezogenen verläuft.

Allgemein ausgedrückt bedeutet dies, dass die ersten und zweiten Signale des bestimmten Zeitraums oder die ermittelten Fahrzustandsgrößen derart korrigiert werden, dass die ermittelten Fahrzustandsgrößen den aus den dritten Signalen bestimmten Fahrzustandsgrößen möglichst genau entsprechen. Dabei werden bei manchen Ausführungsformen die Fahrzustandsgrößen dreidimensionale Geschwindigkeit und/oder dreidimensionale Orientierung des Fahrzeugs durch Integration über den bestimmten Zeitraum der korrigierten ersten und der korrigierten zweiten Signale gemäß dem Bewegungsgleichungssystem für die entsprechenden Fahrzustandsgrößen neu ermittelt. Zum Beispiel werden also die ersten und zweiten Signale derart korrigiert oder angepasst, dass die aus der Lösung der Bewegungsgleichungen der entsprechenden Fahrzustandsgrößen ermittelten Fahrzustandsgrößen möglichst genau den aus den dritten Signalen bestimmten Fahrzustandsgrößen entsprechen. Damit wird der Offsetfehler der Messgrößen bestimmt und ermöglicht somit u.a. eine Korrektur des Sensoroffsets.

Alternativ werden die ermittelten Fahrzustandsgrößen direkt mit den aus den dritten Signalen bestimmten Fahrzustandsgrößen abgeglichen. Diese Alternative ergibt direkt die korrigierten Fahrzustandsgrößen. Ein noch anderer Weg, die Korrektur durchzuführen, ist, zunächst den Fehler der Fahrzustandsgrößen zu berechnen und daraus auf die korrigierten Fahrzustandsgrößen zu schließen. Diese Alternativen können auch miteinander kombiniert werden. Zum Beispiel kann die Fahrzustandsgröße Geschwindigkeit anhand der aus den dritten Signalen bestimmten Fahrzustandsgrößen direkt korrigiert werden, während für die Fahrzustandsgröße Orientierung zunächst der Orientierungsfehler bestimmt wird, aus dem dann die korrigierte Orientierung berechnet wird.

Der bestimmte Zeitraum, über den die ersten und zweiten Signale erfasst werden, kann beliebig gewählt werden und hängt in manchen Ausführungsformen von einem Parameter ab. Ein derartiger Parameter ist bspw. die Verfügbarkeit des dritten Signals oder die Güte der ersten und/oder zweiten Signale, die Qualitätsanforderung an die Präzision des Fahrzustandes, usw. Zum Beispiel liefern die Beschleunigungs- und Drehratensensoren größere Werte, wenn das Fahrzeug entsprechende Bewegungen im dreidimensionalen Raum ausführt (z.B. Kurvenfahrten im Gebirge). Bei großen Beschleunigungen und Drehraten kann bspw. der bestimmte Zeitraum kürzer ausfallen als bei kleinen Beschleunigungen oder Drehraten des Fahrzeugs (z.B. Geradeausfahrt), da im ersteren Fall die Güte der Signale als höher angenommen werden kann als die Güte der Signale im zweiten Fall.

Bei manchen Ausführungsformen werden auch die in der Vergangenheit erhaltenen ersten und zweiten Signale und der sich daraus ergebende ermittelte Verlauf der ermittelten Fahrzustandsgrößen bis zu einem bestimmten Zeitpunkt in der Vergangenheit so korrigiert, dass die ermittelten Fahrzustandsgrößen den aus den dritten Signalen bestimmten Fahrzustandsgrößen, wie zum Beispiel Geschwindigkeit oder Position des Fahrzeugs, möglichst genau entsprechen. Dadurch können die Fehler, die sich im Laufe der Zeit durch die Aufsummierung fehlerhafter Sensorsignale für die Beschleunigung und die Drehraten einschleichen, eliminiert werden.

Bei manchen Ausführungsformen werden alle drei Geschwindigkeitskomponenten bzw. Positionskomponenten der ermittelten Fahrzustandsgrößen, die für eine vollständige dreidimensionale Beschreibung erforderlich sind, abgeglichen oder korrigiert, so dass auch für die Vergangenheit eine äußerst präzise Beschreibung des Fahrzustands im dreidimensionalen Raum vorhanden ist. Daraus folgt, dass auch für die Vergangenheit und den gegenwärtigen Zeitpunkt nicht nur die aktuelle Fahrzeuggeschwindigkeit, sondern der vollständige Geschwindigkeitsvektor des Fahrzeugs und zudem auch noch die genaue Orientierung des Fahrzeuges im Raum präzise bekannt sind und bekannt sein werden, weil die Sensoren hervorragend abgeglichen sind und somit lange integrierbar bleiben. Sind etwa vorübergehend keine dritten Signale zum Abgleich der ermittelten Fahrzustandsgrößen vorhanden, so können die Fahrzustandsgrößen dennoch durch Integration über die Zeit ermittelt werden. Im Übrigen sind auch der daraus abgeleitete Schwimmwinkel und der Rollwinkel präzise bekannt sind, sodass bspw. die relativ große Neigung eines Motorrads präzise bestimmt werden kann.

Außerdem ist es aufgrund der Erfassung des zeitlichen Verlaufs der ermittelten Fahrzustandsgrößen, wie bspw. des Geschwindigkeitsverlaufes, des Fahrzeugs unschädlich, wenn bspw. GPS-Signale nur schlecht oder für eine gewisse Zeit nicht zur Verfügung stehen, da dann immer noch der Fahrzustand relativ präzise bekannt ist. Sobald dann wieder das GPS-Signal zur Verfügung steht, kann dieses bei manchen Ausführungsformen wieder als Stützung als drittes Signal zur Bestimmung des Fahrzustandes verwendet werden.

Das obige Verfahren kann bei manchen Ausführungsformen aber auch ohne GPS-Signal auskommen, indem bspw. die Fahrzeuggeschwindigkeit durch einen Raddrehzahl- oder Radgeschwindigkeitssensor bestimmt wird. Bei solchen Ausführungsformen ist die Fahrzeuggeschwindigkeit zwar nicht derart präzise bekannt wie bei solchen, die das GPS-Signal verwenden. Allerdings lässt sich auch hier der Fahrzustand so genau bestimmen, so dass die Bestimmung des Fahrzeugzustands zum Beispiel ausreichend für ein ESP-System ist.

Der Ablauf des Verfahrens gemäß manchen Ausführungsformen kann nochmals wie folgt zusammengefasst werden: Es werden als Eingangsgrößen drei Beschleunigungen, die im Raum des Fahrzeugkoordinatensystems beschrieben sind, verwendet, die entweder direkt gemessen werden oder als abgeleitete Größen zur Verfügung stehen; weiterhin werden drei Drehraten, die im Raum des Fahrzeugkoordinatensystems bestimmt sind, verwendet, die entweder direkt gemessen werden oder als abgeleitete Größen zur Verfügung stehen; und schließlich wird eine Geschwindigkeit im Raum (z.B. GPS erdgebundenes Koordinatensystem) bzw. einzelne Komponenten der Geschwindigkeit im Raum (wenn z.B. nur ein oder zwei Satelliten verfügbar sind) oder einzelne Komponenten der Geschwindigkeit im Fahrzeugkoordinatensystem oder auch die Position verwendet, wobei die Ableitung der Position die Geschwindigkeit liefert.

Der Fahrzustand wird dann - wie oben dargestellt - im dreidimensionalen Raum beschrieben, so dass folgende Informationen zur Verfügung stehen bzw. abgeleitet werden können:
- drei Drehraten,
- drei Geschwindigkeiten (Betrag und Orientierung) und daraus der Kurswinkel
- drei Winkel, und daraus die Orientierung des Fahrzeugs
- drei Beschleunigungen
- drei Positionen (wenn GPS als Referenz verwendet wird)

Alle Größen sind in beliebigen Achsen darstellbar (Fahrzeugkoordinaten, Erdkoordinaten), so dass eine exakte Kenntnis des Fahrzustands bereitgestellt werden kann. Alle Größen können natürlich auf beliebige Positionen innerhalb des Fahrzeugs umgerechnet werden, und stehen im Fahrzeugkoordinatensystem oder auch im erdgebundenen Koordinatensystem zur Verfügung.

Ein weiterer Vorteil des Verfahrens ist, dass es in der Lage ist, selbst die Position der Hinterachse zu ermitteln und so einen Regelung beispielsweise des Schräglaufwinkels an der Hinterachse zu ermöglichen, ohne dass die Einbaulage der Hinterachse als Parameter bekannt sein muss. Ebenso ist - anders als bei anderen bekannten Methoden - die Kenntnis der Position des Schwerpunkts des Fahrzeugs nicht erforderlich. Bei manchen Ausführungsformen können nämlich die Fahrzustandsgrößen an einem ersten Punkt, beispielsweise der Position der Sensoren innerhalb des Fahrzeugs ermittelt werden. Basierend auf den für diesen ersten Punkt ermittelten Fahrzustandsgrößen und basierend auf bekannten Fahrzustandsgrößen eines zweiten Punktes, beispielsweise der Hinterachse des Fahrzeugs wird dann die relative Lage des zweiten Punktes zum ersten Punkt errechnet, also die relative Lage der Sensoren zur Hinterachse. Eine Vorabapplikation der Einbaulage des Steuergeräts und der Lage der Hinterachse erübrigt sich damit. Das System findet somit die Hinterachse und appliziert sich gewissermaßen selbst. Gleiches ist beispielsweise auch für die Bestimmung der relativen Lage der Vorderachse möglich, wenn zusätzlich noch der Lenkwinkel bekannt ist.

Natürlich können die physikalischen Größen auch ineinander umgerechnet werden. So liefert die Ableitung der GPS-Geschwindigkeit bei manchen Ausführungsformen die Beschleunigung des Fahrzeugs im dreidimensionalen Raum. Die Fahrzeugorientierung kann also bestimmt werden, indem die mit der Inertial-Sensorik gemessene Beschleunigung mit der berechneten Beschleunigung in Übereinstimmung gebracht wird. Die Messung der Geschwindigkeiten im Raum liefert auch mittels Ableitung die Historie der Beschleunigungen im Raum. Als Nächstes wird die Fahrzeugorientierung (im Raum) zu einem bestimmten Zeitpunkt so ermittelt, dass der Verlauf der über die Inertial-Sensorik integrierten Fahrzeugbewegung eine Historie der Beschleunigung liefert, die mit der Beschleunigungshistorie der GPS-Messung "bestmöglichst" übereinstimmt. Dann wird die Orientierung des Fahrzeugs im Raum so bestimmt, dass der durch Integration ermittelte Verlauf der Geschwindigkeit in Übereinstimmung mit dem Verlauf der gemessenen GPS-Geschwindigkeit gebracht wird. Bei manchen Ausführungsformen wird - wie bereits ausgeführt - auch ein Vergleich mit Positionen vorgenommen. Ausführungsformen, die fahrzeugspezifische Geschwindigkeiten verwenden (bspw. durch Raddrehzahlsensor oder Radgeschwindigkeitssensor ermittelt), lösen das Problem auf gleiche Art und Weise, jedoch in einem anderen Koordinatensystem.

Bei manchen Ausführungsformen wird auch der Zeitunterschied zwischen der Bereitstellung der Sensorsignale von dem globalen Positionsbestimmungssystem (GPS) und der Messung bzw. dem Messzeitpunkt der Sensorsignale berücksichtigt. Dies kann dadurch geschehen, dass bspw. zeitlich zusammenhängende Größen bei der Lösung des Bewegungsgleichungssystems einander zugeordnet werden, d.h. es werden bspw. die dritten Signale zeitlich den ersten und zweiten Signalen zugeordnet. Wenn zum Beispiel die zu den Drehraten gehörenden Signale in einem bestimmten Zeitraum und die zu den Beschleunigungen gehörenden Signale in dem bestimmten Zeitraum erfasst wurden, dann fällt bspw. bei manchen Ausführungsformen das Ende des Erfassungszeitraums mit dem Messzeitpunkt des GPS-Signals zusammen.

Bei manchen Ausführungsformen werden alle Fahrzustandsgrößen so transformiert, dass sie sich auf eine gemeinsame Position, bspw. innerhalb des Fahrzeugs, beziehen. Das heißt die Inertialsysteme oder Koordinatensysteme in denen die Fahrzustandsgrößen ermittelt werden haben bspw. den gleichen Ursprung oder fallen sogar zusammen. Dem Fachmann ist grundsätzlich bekannt, wie entsprechende physikalische Größen in unterschiedliche Koordinatensysteme mit unterschiedlichem Ursprung transformiert werden können.

Bei manchen Ausführungsformen wird aus der Abweichung zwischen der bestimmten Fahrzustandsgröße und der ermittelten Fahrzustandsgröße ein Fehler eines ersten (z.B. Beschleunigungssensor) und/oder eines zweiten Sensors (z.B. Drehratensensor), von dem die ersten bzw. zweiten Signale stammen, erkannt. Dies ist möglich, da bei richtiger Funktion der Sensoren bspw. normalerweise der ermittelte Geschwindigkeitsverlauf an die objektiven Geschwindigkeiten in einem erdgebundenen Koordinatensystem angepasst werden kann. Schlägt diese Anpassung fehl, kann daraus bspw. auf einen Fehler eines Sensors geschlossen werden.

Bei manchen Ausführungsformen werden die Fahrzustandsgrößen bei einem stabilen Fahrzustand ermittelt, z.B. wird das Bewegungsgleichungssystem bei einem stabilen Fahrzustand gelöst. Ein stabiler Fahrzustand liegt bspw. vor, wenn das Fahrzeug nicht schleudert, d.h. einen kleinen Schwimmwinkel aufweist. Insbesondere bei Kurvenfahrten des Fahrzeugs liefern bspw. die Beschleunigungssensoren größere und damit auch zuverlässigere Werte als bei Geradeausfahrt, sodass diesen bspw. eine höhere Zuverlässigkeit bei der Lösung des Bewegungsgleichungssystems zugeordnet werden kann (bspw. durch einen entsprechenden Gewichtungsfaktor). Dahingegen ist bspw. beim Start des Fahrzeugs der Fahrzustand auch stabil und wohlbekannt. Auch diese Information kann als Startwert beim Lösen des Bewegungsgleichungssystem bzw. der Integration der ersten und zweiten Signale mit herangezogen werden.

Bei manchen Ausführungsformen werden zusätzlich oder als alleinige dritte Messgröße Signale erfasst, die auf Sensorsignalen basieren, die die Ausrichtung des Fahrzeugs relativ zum Erdmagnetfeld angeben. Diese Sensorsignale können bspw. von einem Kreiselkompass oder Magnetkompass stammen, wie er ohnehin bspw. in Schiffen oder Flugzeugen vorhanden ist. Dadurch ist es auch möglich den "Fahrzustand" eines Flugzeuges oder Schiffes vollständig zu bestimmen.

Manche Ausführungsbeispiele betreffen eine Vorrichtung zur Bestimmung des Fahrzustands eines Fahrzeugs im dreidimensionalen Raum. Ein derartige Vorrichtung umfasst bspw. eine Inertialsensorik, die ausgelegt ist, Beschleunigungssignale auszugeben, die die Beschleunigung des Fahrzeugs im dreidimensionalen Raum angeben, und Drehratensignale auszugeben, die die Drehraten des Fahrzeugs im dreidimensionalen Raum angeben. Eine derartige Inertialsensorik kann auch als 6D-Sensorik bezeichnet werden, da sie sechs Komponenten des Fahrzustands des Fahrzeugs erfasst (drei Beschleunigungskomponenten und drei Drehratenkomponenten, wie oben bereits beschrieben). Weiterhin weist bei manchen Ausführungsformen die Vorrichtung ein Mittel zum Ermitteln der Fahrzustandsgrößen dreidimensionale Geschwindigkeit und/oder dreidimensionale Orientierung des Fahrzeugs durch Integration über einen bestimmten Zeitraum der Beschleunigungssignale und der Drehratensignale gemäß dem Bewegungsgleichungssystem für die entsprechenden Fahrzustandsgrößen auf. Weiterhin umfasst die Vorrichtung bei manchen Ausführungsformen ein Mittel zum Ausgeben eines oder mehrerer zusätzlicher Sensorsignale, mit denen eine oder mehrere Komponenten der ermittelten Fahrzustandsgrößen bestimmbar sind, d.h. das Mittel umfasst bei manchen Ausführungsformen einen GPS-Sensor und/oder einen Raddrehzahlsensor und/oder einen Radgeschwindigkeitssensor, und/oder ein Radar und/oder einen optischen Sensor. Und die Vorrichtung umfasst ein Korrekturmittel zum Korrigieren der Beschleunigungssignale und Drehratensignale des bestimmten Zeitraums oder der ermittelten Fahrzustandsgrößen derart, dass die ermittelten Fahrzustandsgrößen den aus den zusätzliche Sensorsignalen bestimmten Fahrzustandsgrößen möglichst genau entsprechen.

Bei manchen Ausführungsformen ist die Vorrichtung derart ausgebildet, dass die bestimmten Fahrzustandsgrößen wenigstens einer der folgenden Größen entspricht: Beschleunigung, Geschwindigkeit, Position, Drehrate und/oder Orientierung des Fahrzeugs. Natürlich kann die bestimmte Fahrzustandsgröße auch nur eine Komponente der aufgezählten Größe sein, wie oben bereits ausgeführt wurde.

Die Vorrichtung ist bei manchen Ausführungsformen derart ausgebildet, dass sie alle oben ausgeführten Merkmale von Ausführungsformen ausführen kann. Dies wird bei manchen Ausführungsformen dadurch erreicht, dass entsprechende Mittel vorgesehen sind, die so ausgelegt sind, dass sie entsprechende Merkmale der obigen Ausführungsformen ausführen können. Manche Ausführungsformen umfassen einen Mikroprozessor, der entsprechend programmiert werden kann, die obigen Merkmale der Ausführungsformen auszuführen.

Manche Ausführungsformen der Vorrichtung können sehr kompakt aufgebaut werden und in beliebige Fahrzeuge an beliebiger Stelle innerhalb des Fahrzeugs positioniert werden. Bei manchen Ausführungsformen können dann die Fahrzustandsgrößen und/oder die erfassten Signale in das entsprechende Koordinatensystem transformiert werden, das bspw. seinen Ursprung in dem Einbauort innerhalb des Fahrzeugs hat. Bei manchen Ausführungsformen befinden sich die Sensoren der Inertialsensorik an verschiedenen Stellen. Bei solchen Ausführungsformen werden dann die entsprechenden Transformationen der Signal durchgeführt, sodass bspw. die ersten und zweiten Signale sich auf die Position des Einbauortes der Vorrichtung innerhalb des Fahrzeugs beziehen, wie auch schon weiter oben ausgeführt wurde.

Die mit Hilfe der oben genannten Verfahren bzw. Vorrichtungen nach Ausführungsformen der Erfindung bereitgestellten Ergebnisse sind nicht Modellgrößen die auf Hypothesen basieren (so wie bei heutigen Fahrdynamikregelsystemen), sondern sie liefern besonders genaue Fahrzustandsgrößen. Die Fahrzustandsbeschreibung ist umfassend, d.h. nahezu lückenlos (alle Richtungen, Drehraten, Winkel, Geschwindigkeiten des Fahrzeugs). Die Fahrzustandsinformation ist darüberhinaus bei manchen Ausführungsformen zeitsynchron, d.h. es existiert kein Zeitverzug zwischen der zeitlichen Zuordnung und der Bereitstellung der Fahrzustandsgrößen. Bei manchen Ausführungsformen können die Sensorsignale ohne Nutzung weiterer Messgrößen (oder Modellgrößen) kompensiert werden (Offset und Empfindlichkeit). Außerdem ist eine effiziente Überwachung der Sensoren gewährleistet.

Manche Ausführungsformen funktionieren, wie oben angedeutet, auch bei schlechtem GPS-Empfang: Selbst wenn nur wenige Satelliten vorhanden (z.B. nur einer), ist die Ausführungsform funktionsfähig und liefert entsprechende Fahrzustandsinformationen. Bei manchen Ausführungsformen kann die Auswertung der GPS-Signale verbessert werden, da die Geschwindigkeit im Raum bereits in hoher Qualität zur Verfügung steht.

GPS-Signale werden z.B. durch Reflexionen, bspw. an Wänden von Hochhäusern, gestört und können dann nicht direkt empfangen werden. Dadurch wird eine verfälschte Komponente der Fahrzeuggeschwindigkeit im Raum ermittelt. Folglich wird bei manchen Ausführungsformen jedes Satellitensignal auf Güte geprüft und es werden bspw. nur die besten Satelliten verwendet, um das Verfahren zu stützen und Signale mit Reflexion können sicher erkannt und ausgeschlossen werden. So ermöglicht bei manchen Ausführungsformen die Nachführung einer hochqualitativen Geschwindigkeit im Raum es (z.B. bei schlechtem GPS-Empfang), zu prüfen, ob die vom GPS bereitgestellten Geschwindigkeitskomponenten plausibel sind oder nicht. Wenn die GPS-Information zu einem Messpunkt unplausibel ist, dann kann diese bei manchen Ausführungsformen aus der Berechnung genommen werden oder mit einem sehr geringen Gewichtungsfaktor versehen werden.

Manche Ausführungsformen ermöglichen auch eine zuverlässige Erkennung und Regelung von Übersteuer- und Überschlagsituationen ohne auf einen Lenkradwinkel angewiesen zu sein, da der sechsdimensionale Fahrzustand präzise ermittelt wird.

Weil bei manchen Ausführungsformen das Verfahren die Informationen eines ausdehnbaren Zeitbereiches, d.h. eines bestimmten Zeitraums, verwendet, können auch Messpunkte fehlen, d.h. es reicht auch aus, wenn nur einzelne Komponenten der Geschwindigkeit vom GPS bereitgestellt werden können. Dies passiert bspw., wenn der GPS-Empfang schlecht ist; d.h. steht z.B. nur ein Satellit zur Verfügung, dann ist nur die Geschwindigkeitskomponente in Satellitenrichtung bekannt. Stehen ausreichend viele Messpunkte über einen bestimmten Zeitraum zur Verfügung, dann sind auch bei einer solchen lückenhaften GPS-Messung ausreichend Informationen vorhanden, um das Gleichungssystem zu lösen. Dementsprechend sind sowohl zeitliche Lücken im GPS-Signal als auch Komponentendefizite der 3D-Information der GPS-Geschwindigkeit unschädlich.

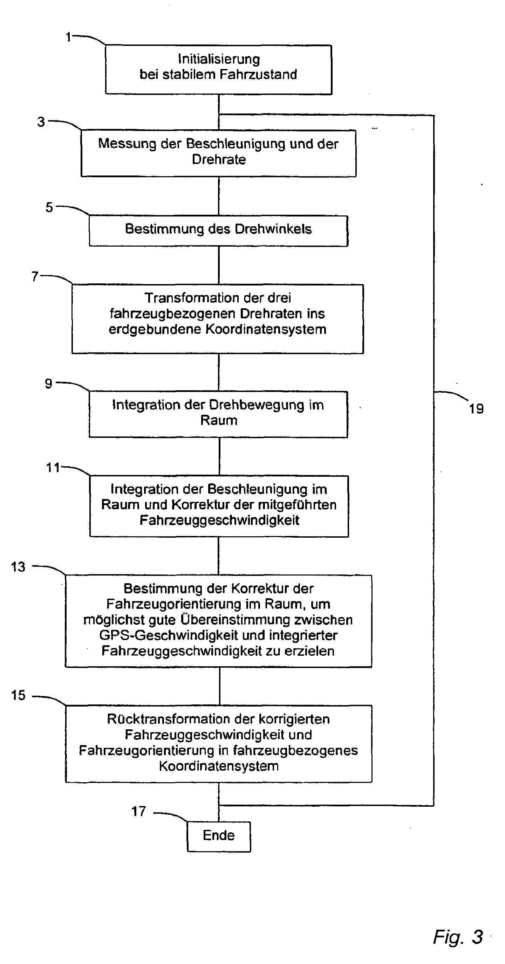

Zurückkehrend zur Figur 3 ist dort ein Verfahren nach einer Ausführungsform der vorliegenden Erfindung veranschaulicht. Initialisiert wird das Verfahren im Schritt 1 bei einem stabilen Fahrzustand (z.B. stationäre Geradeausfahrt), bei dem angenommen werden kann, dass die Fahrzeugorientierung mit dem Geschwindigkeitsvektor übereinstimmt. Im Schritt 3 werden die Beschleunigung und die Drehraten des Fahrzeuges, bspw. mit einer 6D-Sensorik, gemessen, sodass drei Komponenten der Beschleunigung (Längs-, Quer- und Vertikalbeschleunigung) und drei Komponenten der Drehraten (Roll-, Nick- und Gierrate) vorliegen. Der Drehwinkel um die Fahrzeuglängsachse wird im Schritt 5 bestimmt, indem die gemessene Beschleunigung (inklusive Erdanziehung) in Übereinstimmung mit der einer stabilen Fahrweise entsprechenden Modellquerbeschleunigung gebracht wird. Somit sind an dieser Stelle die Fahrzeugorientierung im Raum und Fahrzeuggeschwindigkeit im Raum bekannt. Dann werden im Schritt 7 die drei fahrzeugbezogenen Drehraten ins erdgebundene Koordinatensystem transformiert. Durch Integration der Drehbewegung im Raum wird im Schritt 9 die neue Orientierung im Raum ermittelt.

Ausgehend von der mitgeführten Fahrzeuggeschwindigkeit im Raum kann diese durch Integration der Beschleunigungsmessung im Schritt 11 weiter bestimmt werden (nachdem die im Fahrzeugkoordinatensystem gemessene Beschleunigung ins Raumkoordinatensystem transformiert wurde). Wenn die ermittelte Geschwindigkeit im Raum langsam von der GPS-Messung abdriftet, wird im Schritt 13 die Korrektur der Fahrzeugorientierung im Raum bestimmt, die notwendig ist, um eine möglichst gute Übereinstimmung von GPS-Geschwindigkeit und Integrationsgeschwindigkeit zu erzielen. Die nun nach Korrektur ermittelte Geschwindigkeit und Fahrzeugorientierung im Raum kann durch Koordinatentransformation im Schritt 15 ins fahrzeugbezogenen Koordinatensystem oder ein beliebiges Koordinatensystem (z.B. an den Radaufstandspunkten) zurück transformiert werden. Im Schritt 17 würde das Verfahren enden, sofern es nicht - wie durch die entsprechende Verbindung 19 angedeutet - schleifenartig ausgeführt wird, sodass immer der aktuelle, korrigierte Fahrzustand vorhanden ist.

Letztendlich ist es das Ziel, sechs Unbekannte zu ermitteln, nämlich die Geschwindigkeit in einem Raumkoordinatensystem und die Fahrzeugorientierung in diesem Raumkoordinatensystem. Zur Stützung reichen beliebige Information über Geschwindigkeit oder Position des Fahrzeugs aus, die bspw. von einem GPS-System stammen können oder einem Sensor, der direkt oder indirekt die Geschwindigkeit des Fahrzeugs misst. Letztendlich müssen mindestens sechs Gleichungen aufgestellt werden können. Selbst wenn nur eine Information zur Stützung verfügbar ist, wird es aufgrund der Betrachtung des größeren Zeitbereichs möglich sein, ein überbestimmtes Gleichungssystem aufzustellen.

Wie bereits erläutert, sind zur Lösung des Systems mindestens sechs Gleichungen notwendig, die zusammen ein Bewegungsgleichungssystem ergeben. Selbst wenn bspw. ein GPS-Modul nur einmal pro Sekunde eine Geschwindigkeit im Raum liefert (V-north, V-east, V-height), dann stehen bereits nach zwei Sekunden ausreichend Daten zur Verfügung um das Bewegungsgleichungssystem lösen zu können, da dann sechs Geschwindigkeitsmesswerte zur Verfügung stehen.

Ab der dritten Sekunde ist das Bewegungsgleichungssystem in diesem Beispiel überbestimmt. Zieht man den Zeitbereich der letzten Sekunden heran, um das Bewegungsgleichungssystem aufzubauen, dann liefert bei manchen Ausführungsbeispielen z.B. ein LSq-Verfahren (Least Squares Approximation) genaue Geschwindigkeitsinformationen im Raum.

Der Zeitverzug in der Bereitstellung der GPS-Messung wird bei einer weiteren Ausgestaltung der Ausführungsform z.B. dadurch berücksichtigt, dass für die Gleichungen im Gleichungssystem zeitlich zusammengehörende Größen verarbeitet werden. Zur Veranschaulichung soll folgendes Beispiel dienen: Das System kennt (oder ermittelt) den Zeitverzug der GPS-Messung und den Zeitpunkt der GPS-Bereitstellung (z.B. einmal pro Sekunde). Hat die GPS-Messung einen Bereitstellungsverzug zwischen Messung und Bereitstellung von bspw. 0,7 Sekunden, dann wird 0,3 Sekunden nach der vorangegangenen GPS-Sendung der Wert der integrierten Geschwindigkeit abgespeichert und erst 0,7 Sekunden später das Gleichungssystem aufgestellt. Die exakte Geschwindigkeit steht trotzdem durchgehend mit großer Genauigkeit zur Verfügung, weil in der Zwischenzeit die Bewegung des Fahrzeugs im Raum auf Basis einer sehr genauen Kenntnis der Fahrzeugorientierung und -geschwindigkeit aufintegriert wird.

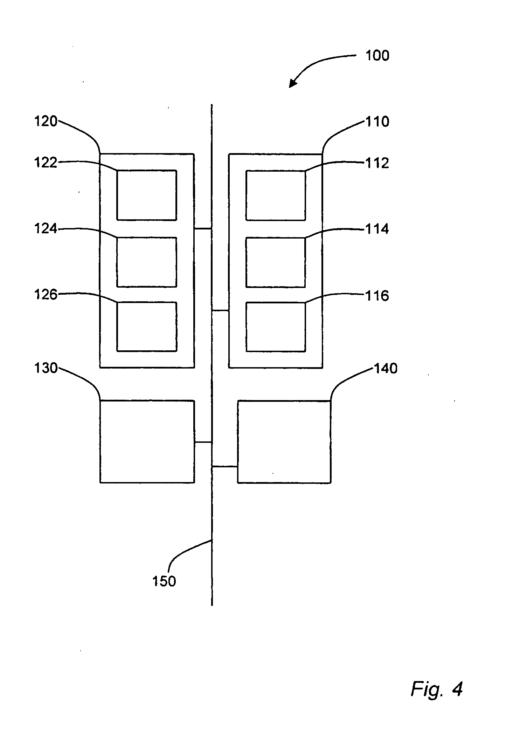

In Fig. 4 ist schematisch eine Ausführungsform einer Vorrichtung 100 zur vollständigen Bestimmung des Fahrzustands eines Fahrzeugs im dreidimensionalen Raum dargestellt. Die Vorrichtung 100 umfasst einen Beschleunigungssensor 110 und einen Drehratensensor 120, die zusammen eine Inertialsensorik bilden. Der Beschleunigungssensor 110 enthält einen Längs- 112, Quer- 114 und Vertikalbeschleunigungssensor 116, die jeweils ein Signal ausgeben, das repräsentativ für die Quer-, Längs- bzw. Vertikalbeschleunigung des Fahrzeugs ist. Somit beschreiben die Signale die Beschleunigung des Fahrzeugs im dreidimensionalen Raum. Die Signale werden von dem Beschleunigungssensor auf eine Signalleitung 150 gegeben, sodass diese von einem Mikroprozessor 140 verarbeitet werden können. Der Drehratensensor enthält einen Nick- 122, Roll- 124 und Gierratensensor 126, die jeweils ein Signal ausgeben, das repräsentativ für die Nick-, Roll- bzw. Gierrate des Fahrzeugs ist. Somit beschreiben die Signale die Drehrate des Fahrzeugs im dreidimensionalen Raum. Auch der Drehratensensor 120 gibt die Signale an die Signalleitung 150.

Weiterhin umfasst die Vorrichtung 100 einen GPS-Sensor 130, der GPS-Signale empfangen kann und bspw. mit einer (oder mehreren) Antenne(n) verbunden ist. Der GPS-Sensor 130 gibt bspw. ein Signal auf die Signalleitung 150, das repräsentativ für die Geschwindigkeit oder die Position des Fahrzeugs ist.

Der Mikroprozessor verarbeitet letztlich die Signale so, wie es weiter oben schon beschrieben wurde und wie es bspw. bei der Ausführungsform nach Fig. 3 geschieht. So integriert der Mikroprozessor 140 die Beschleunigungs- und Drehratensignale, um das zugrundeliegende Bewegungsgleichungssystem zu lösen und die entsprechenden Fahrzustandsgrößen, nämlich dreidimensionale Fahrzeuggeschwindigkeit und dreidimensionale Orientierung im Raum, zu ermitteln. Dann wird die daraus resultierende Fahrzeuggeschwindigkeit mit der von dem GPS-Sensor 130 erhaltenen Fahrzeuggeschwindigkeit verglichen und gegebenenfalls korrigiert. Die Korrektur geschieht - wie oben bereits ausgeführt - bspw. dadurch, dass die Größen für das Bewegungsgleichungssystem, nämlich die Beschleunigungs- und Drehratensignale, so angepasst werden, dass die Lösung des Bewegungsgleichungssystems, nämlich die neue Fahrzeuggeschwindigkeit, mit der des GPS-Moduls 130 übereinstimmen. Die Vorrichtung 100 kann bspw. Informationen über den Fahrzustand über die Signalleitung 150 nach außen geben, bspw. an ein Fahrdynamikregelsystem in einem Auto oder bspw. an ESP-, ACC-, Airbag-, usw. Systeme.

Natürlich gibt es Ausführungsformen der Vorrichtung 100, die jedes der weiter oben beschriebenen Merkmale der Ausführungsformen, die das Verfahren betreffen, umsetzen kann. Dies ist bspw. durch eine Programmierung oder entsprechende Ausgestaltung des Mikroprozessors 140 möglich.

Es existieren natürlich auch Ausführungsformen mit beliebiger Anordnung der Sensoren, z.B. kann sogar die gesamte Inertialsensorik im GPS-Modul untergebracht sein.

Bei manchen Ausführungsformen der Vorrichtung 100 wird ein Kalmanfilter zur Bestimmung des Fahrzustands verwendet.

Als Signale zur Korrektur bzw. Stützung können natürlich auch die anderen (oben erwähnten) Signale, wie bspw. die vom GPS gelieferte Position oder die Geschwindigkeit, die von einem Raddrehzahlsensor oder Radgeschwindigkeitssensor ermittelt wurde, verwendet werden.

Bei manchen Ausführungsformen der Vorrichtung 100 ist ein Abgleich der Sensoren durch eine Analyse der Korrekturen möglich, da nach Erhalt eines neuen GPS-Messwerts eine Berechnung der Korrektur der Orientierung im Raum des Fahrzeugs berechnet wird. In Zeitbereichen mit geringen Drehraten, wie bspw. bei der Geradeausfahrt, bedeutet eine regelmäßige Orientierungskorrektur um eine bestimmte Fahrzeugachse, dass die entsprechende Drehrate einen gewissen Offset aufweist bzw. aufweisen kann. Sind nur bei höheren Drehraten Korrekturen notwendig, dann kann bei manchen Ausführungsformen die Korrektur einer Skalierungsabweichung zugeordnet werden und darauf basierend eine entsprechende Skalierungskorrektur vorgenommen werden. Auf gleiche Art und Weise kann auch bei manchen Ausführungsformen eine Kompensation für die Beschleunigungssensoren erfolgen, wenn regelmäßige Korrekturen der Geschwindigkeiten in dominanten Richtungen beobachtet werden.

Manche Ausführungsformen zeichnen sich durch eine hohe Eigensicherheit aus: Wenn einer der Inertialsensoren einen Fehler aufweist, dann wird es nicht mehr möglich sein, eine Orientierung des Fahrzeugs im Raum zu bestimmen, bei der die Verläufe von integrierter Bewegung und gemessener Bewegung in Übereinstimmung gebracht werden können, wodurch ein entsprechender Sensorfehler erkannt werden kann.

Bei Ausführungsformen mit extremen Qualitätsanforderungen an die Fahrzustandsbestimmung (z.B. augenblicklicher Fehlererkennung) kann zusätzlich für eine Drehrate und/oder eine Beschleunigung ein weiterer Sensor vorgesehen werden, der eine Redundanz ermöglicht mit der jeder Fehler eines beliebigen Sensors erkannt wird. Beispielsweise deckt ein Drehratensensor und ein Beschleunigungssensor die Redundanz aller Sensoren ab.

Bei manche Ausführungsformen kann die Inertialsensorik bzw. die Vorrichtung 100 an einem beliebigen Ort und in einer beliebigen Orientierung im Fahrzeug eingebaut werden, da das System aufgrund der verfügbaren vollständigen Fahrzustandserfassung in der Lage ist, selbständig die Orientierung relativ zu den Fahrzeugachsen zu bestimmen. Bei manchen Ausführungsformen wird, um eine hochqualitative Funktion sicherzustellen, die gemessene GPS-Geschwindigkeit auf den Ort der Einbaulage der Inertialsensorik in dem Fahrzeug transformiert. Bei manchen Ausführungsformen werden alle Größen auf einen gemeinsamen Punkt des Fahrzeugs transformiert.

Bei manchen Ausführungsformen sind die Sensoren 110, 120, 130 der Vorrichtung 100 oder die Sensoren der Inertialsensorik nahezu an einem einzigen Ort bzw. nahe aneinander verbaut. Bei Ausführungsformen, bei denen aufgrund spezieller Randbedingungen die Sensoren weiter auseinander verbaut sind, werden basierend auf den verfügbaren Drehraten im Raum alle Signale so transformiert, dass sie sich auf eine gemeinsame Position beziehen.

Bei manchen Ausführungsformen ist, im Gegensatz zu bekannten Reglern der Querdynamik, kein Lenkwinkel mehr notwendig, um eine robuste Beschreibung des Fahrzustands und eine robuste und sichere Querdynamik- und Überschlagsregelung ohne Lenkwinkel zu ermöglichen. Bei manchen Ausführungsformen wird der Lenkwinkel zusätzlich verwendet, um den Fahrerwunsch besser interpretieren zu können. Folglich ist es bei manchen Ausführungsformen möglich, den Regler so auszulegen, dass der Regler robust gegen Fehler des Lenkwinkels ist, wenn der Lenkwinkel als Fahrerwunschinformation herangezogen wird. Bei den bisher bekannten Regelsystemen wird viel Aufwand betrieben, um das Lenkwinkelsignal sehr effizient zu überwachen. Dieser Aufwand entfällt bspw. bei den Ausführungsformen, die keinen Lenkwinkelsensor verwenden.

ABS-Regler nach dem Stand der Technik müssen in regelmäßigen Abständen Räder unterbremsen, um eine sichere Bestimmung der Fahrzeuglängsgeschwindigkeit zu ermöglichen. Nachteil der Vorgehensweise ist, dass das Unterbremsen der Räder zu einer Verlängerung des Bremswegs führt. Dieser Nachteil fällt bei manchen Ausführungsformen weg, weil die Geschwindigkeit durchgehend in hoher Qualität zur Verfügung steht. Somit können die Radschlupfwerte sehr exakt eingestellt werden, so dass die optimale Verzögerung und Lenkbarkeit des Fahrzeugs erzielt wird.

Bei Allradfahrzeugen besteht speziell das Problem, dass im Antriebsfall alle Räder synchron durchdrehen können. Der ASR-Regler muss aber dafür sorgen, dass der Radschlupf nicht zu groß wird. Der ASR-Regler nach dem Stand der Technik hat jedoch das Problem, dass eine Geschwindigkeitsbestimmung auf Basis der Radgeschwindigkeiten nicht mehr die echte Fahrzeuglängsgeschwindigkeit bereitstellt; es handelt somit um eine Schätzgröße mit entsprechenden Unsicherheiten. Wird die Geschwindigkeit zu hoch geschätzt, dann wird der ASR Regler zu viel Schlupf zulassen, was sich negativ auf die Fahrzeugstabilität auswirkt. Wenn die Geschwindigkeit zu niedrig geschätzt wurde, dann wird zu weinig Radschlupf eingestellt werden, was dann zu Traktionsdefiziten führt. Auch diese Schwierigkeiten können wenigstens teilweise durch manche Ausführungsformen beseitigt werden, da die tatsächliche Fahrzuggeschwindigkeit präzise bspw. für den ASR-Regler zur Verfügung steht.

Fahrdynamikregelsysteme nach dem Stand der Technik, wie eingangs beschrieben, sind meistens von aufwendigen Modellen abhängig, um den Fahrzustand beschreiben zu können. Eine angemessene Fahrzustandsbeschreibung ist somit nur dann möglich, wenn die Fahrzeugparameter (Modellparameter) in ausreichend guter Qualität verfügbar sind. Die Folge ist, dass bspw. bei Alterung oder Umrüstung (Stichwort: "Tuning") des Fahrzeugs die Parametrisierung nicht mehr korrekt ist. Dies führt dazu, dass die Regelungsqualität schlechter wird. Wenn ein Halter eines Fahrzeugs zum Beispiel Räder mit einem anderem Durchmesser montiert, dann stimmt die berechnete Fahrgeschwindigkeit nicht mehr mit der Realität überein, wodurch die Regelgüte schlechter wird. Auch diese Schwierigkeit wird bei manchen Ausführungsformen umgangen, da sie keine Modellparameter bzw. von dem Fahrzeug direkt abhängige Parameter (wie den Reifendurchmesser) zur Bestimmung des Fahrzustandes benötigen. Bei manchen Ausführungsformen, bei denen Fahrzeugparameter weiterhin für einen Regler notwendig sind, besteht sogar aufgrund der vollständigen Kenntnis des Fahrzustandes die Möglichkeit, Fahrzeugparameter (z.B. den Reifendurchmesser) im Fahrzeuglebenslauf durchgehend zu aktualisieren.

Bei manchen Ausführungsformen bei denen der Fahrzustand nicht nur fahrzeugbezogen sondern auch im Erdkoordinatensystem zur Verfügung steht, kann durch hinzuziehen von GPS-Kartenmaterial eine gezieltere Regelung erfolgen. Zum Beispiel kann der Regler eine verstärkte Unterstützung bereitstellen, die den Fahrer hilft das Fahrzeug wieder in Straßenlängsrichtung zu bringen. Alternativ kann bei manchen Ausführungsformen der Fahrer gewarnt werden, wenn der im Raum bekannte Fahrzustand nicht mehr der Straßenführung angepasst ist.

Bei manchen Ausführungsformen werden mögliche Filterkoeffizienten (oder Verstärkungen) situationsabhängig ausgelegt. Zum Beispiel kann die Stützung bei guter Satellitenverfügbarkeit des GPS verstärkt werden, d.h. die vom GPS erhaltene Fahrzeuggeschwindigkeit bzw. Position ist besonders zuverlässig und kann folglich zeitlich oft zur Korrektur verwendet werden. Wohingegen für den Fall, dass nur sehr wenige Satelliten verfügbar sind, der betrachtete Zeitraum für das Verfahren verlängert wird, um mehrer Daten zu sammeln und das Bewegungsgleichungssystem stärker überzubestimmen. Jeder einzelne Stützpunkt (bspw. Geschwindigkeit direkt oder indirekt aus dem GPS-Signal oder Raddrehzahl- oder Radgeschwindigkeitssensorsignal abgeleitet) kann mit einer angepassten Gewichtung in die Berechnung eingebracht werden - je nach dem wie zuverlässig die entsprechende Information ist.

Bei manchen Ausführungsformen kann der Anfahrvorgang sehr genau verfolgt werden, da mit der Inertialsensorik die Fahrtrichtung sofort zur Verfügung steht, so dass bspw. spezielle Raddrehzahlsensoren mit Raddrehrichtungserkennung überflüssig werden.

Bei manchen Ausführungsformen ist vorgesehen, den Zeitverzug zwischen GPS-Messung und Inertialsensorik abzugleichen, bspw. wenn die GPS-Geschwindigkeit von außen bereitgestellt wird, z.B. über eine serielle Schnittstelle eines Navigationssystems.

Bei manchen Ausführungsformen ist vorgesehen, die Qualität der berechneten Fahrdynamikgrößen zu bestimmen und diese bspw. Fahrdynamikregelsystemen als Toleranz zur Verfügung zu stellen.

## Patentansprüche

1. Verfahren zur Bestimmung des Fahrzustands eines Fahrzeugs im dreidimensionalen Raum zur Fahrdynamikregelung des Fahrzeugs, wobei das Verfahren die Schritte umfasst:
- Erfassen von ersten Signalen über einen bestimmten Zeitraum, die auf ersten Sensorsignalen basieren, die der dreidimensionalen Beschleunigung des Fahrzeugs entsprechen;
- Erfassen von zweiten Signalen über den bestimmten Zeitraum, die auf zweiten Sensorsignalen basieren, die den dreidimensionalen Drehraten des Fahrzeugs entsprechen;
- Ermitteln der Fahrzustandsgrößen dreidimensionale Geschwindigkeit und dreidimensionale Orientierung des Fahrzeugs durch Integration über den bestimmten Zeitraum der ersten Signale und der zweiten Signale gemäß dem Bewegungsgleichungssystem für die entsprechenden Fahrzustandsgrößen;
- Erfassen von einem oder mehreren dritten Signalen, die auf einem oder mehreren zusätzlichen dritten Sensorsignalen von einem Raddrehzahlsensor oder Radgeschwindigkeitssensor basieren, mit denen eine oder mehrere Komponenten der ermittelten Fahrzustandsgrößen bestimmbar sind;
- Korrigieren der ersten und zweiten Signale des bestimmten Zeitraums oder der ermittelten Fahrzustandsgrößen derart, dass die ermittelten Fahrzustandsgrößen den aus den dritten Signalen bestimmten Fahrzustandsgrößen möglichst genau entsprechen; und
- Verwenden der ermittelten Fahrzustandsgrößen zur Fahrdynamikregelung.

2. Verfahren nach Anspruch 1, bei welchem die aus den dritten Signalen bestimmten Fahrzustandsgrößen wenigstens einer der folgenden entspricht: Beschleunigung, Geschwindigkeit, Position, Drehrate und/oder Orientierung des Fahrzeugs.

3. Verfahren nach einem der vorhergehenden Ansprüche, bei welchem die Fahrzustandsgrößen an einem ersten Punkt des Fahrzeugs ermittelt werden und basierend auf den für diesen ersten Punkt ermittelten Fahrzustandsgrößen und basierend auf bekannten Fahrzustandsgrößen eines zweiten Punktes des Fahrzeugs die relative Lage des zweiten Punktes zum ersten Punkt errechnet wird.

4. Verfahren nach einem der vorhergehenden Ansprüche, bei welchem aus der Abweichung zwischen der bestimmten Fahrzustandsgröße und der ermittelten Fahrzustandsgröße, ein Fehler eines ersten und/oder zweiten Sensors, von dem die ersten bzw. zweiten Sensorsignale stammen, erkannt wird.

5. Verfahren nach einem der vorhergehenden Ansprüche, bei welchem die Fahrzustandsgrößen bei einem stabilen Fahrzustand ermittelt werden.

6. Verfahren nach einem der vorhergehenden Ansprüche, bei welchem zusätzlich als dritte Messgröße Signale erfasst werden, die auf Sensorsignalen basieren, die der Ausrichtung des Fahrzeugs relativ zum Erdmagnetfeld entsprechen.

7. Vorrichtung zur Bestimmung des Fahrzustands eines Fahrzeugs im dreidimensionalen Raum zur Fahrdynamikregelung des Fahrzeugs, umfassend:
- eine Inertialsensorik (110,120), die ausgelegt ist, Beschleunigungssignale auszugeben, die der Beschleunigung des Fahrzeugs im dreidimensionalen Raum entsprechen, und Drehratensignale auszugeben, die den Drehraten des Fahrzeugs im dreidimensionalen Raum entsprechen;
- ein Mittel (140) zum Ermitteln der Fahrzustandsgrößen dreidimensionale Geschwindigkeit und dreidimensionale Orientierung des Fahrzeugs durch Integration über einen bestimmten Zeitraum der Beschleunigungssignale und der Drehratensignale gemäß dem Bewegungsgleichungssystem für die entsprechenden Fahrzustandsgrößen;
- ein Mittel (130) zum Ausgeben eines oder mehrerer zusätzlicher Sensorsignale, mit denen eine oder mehrere Komponenten der ermittelten Fahrzustandsgrößen bestimmbar sind, wobei das Mittel (130) einen Raddrehzahlsensor oder einen Radgeschwindigkeitssensor umfasst; und
- ein Korrekturmittel (140) zum Korrigieren der Beschleunigungssignale und Drehratensignale des bestimmten Zeitraums oder der ermittelten Fahrzustandsgrößen derart, dass die ermittelten Fahrzustandsgrößen den aus den zusätzlichen Sensorsignalen bestimmten Fahrzustandsgrößen möglichst genau entsprechen, wobei die Vorrichtung dazu ausgelegt ist, die ermittelten Fahrzustandsgrößen an eine Fahrdynamikregelung zu übergeben.

8. Vorrichtung nach Anspruch 7, bei welcher die aus den zusätzlichen Sensorsignalen bestimmten Fahrzustandsgrößen wenigstens einer der folgenden entspricht: Beschleunigung, Geschwindigkeit, Position, Drehrate und/oder Orientierung des Fahrzeugs.

9. Vorrichtung nach einem der Ansprüche 7 bis 8, die zusätzlich ausgelegt ist, ein Verfahren nach einem der Ansprüche 3 bis 6 auszuführen.

## Claims

1. A method for determining the driving state of a vehicle in three-dimensional space for vehicle dynamic control of the vehicle, wherein the method is comprised of the steps:
- sensing over a specific time period first signals that are based on first sensor signals, which correspond to the three-dimensional acceleration of the vehicle;
- sensing over the specific time period second signals that are based on second sensor signals, which correspond to the three-dimensional angular rates of the vehicle
- calculating the driving state variables of three-dimensional velocity and three-dimensional orientation of the vehicle by integrating over the specific time period the first signals and the second signals according to the system of equations of motion for the corresponding driving state variables;
- sensing of one or more third signals that are based on the one or more additional third sensor signals from a wheel speed sensor or a wheel velocity sensor, with which one or more components of the calculated driving state variables can be determined;
- correcting the first and second signals of the specific time period or the calculated driving state variables so that the calculated driving state variables correspond as exactly as possible to the driving state variables determined from the third signals; and
- using the calculated driving state variables for vehicle dynamic control.

2. The method according to claim 1, in which the driving state variables determined from the third signals correspond to at least one of the following: acceleration, velocity, position, angular rate and/or orientation of the vehicle.

3. The method according to one of the preceding claims, in which the driving state variables are determined at a first point of a vehicle and, based on the driving state variables calculated for this first point, and based on known driving state variables of a second point of the vehicle, the position of the second point relative to the first point is calculated.

4. The method according to one of the preceding claims, in which from the deviation between the determined driving state variable and the calculated driving state variable, an error is detected of the first and/or second sensor from which the first and second sensor signals originate.

5. The method according to one of the preceding claims, in which the driving state variables are calculated during a stable driving state.

6. The method according to one of the preceding claims, in which signals based on sensor signals that indicate the alignment of a vehicle relative to the earth's magnetic field are sensed additionally as third measurement variable.

7. A device for determining the driving state of a vehicle in three-dimensional space for vehicle dynamic control of the vehicle, comprising:
- an inertial sensor system (110, 120) that is designed to issue acceleration signals that correspond to the acceleration of the vehicle in three-dimensional space, and to issue angular rate signals that correspond to the angular rates of the vehicle in three-dimensional space;
- a means (140) for calculating the driving state variables of three-dimensional velocity and the three-dimensional orientation of the vehicle by integrating, over a specific time period, the acceleration signals and the angular rate signals according to the system of equations of motion for the corresponding driving state variables;
- a means (130) for issuing one or more additional sensor signals with which one or more components of the calculated driving state variables can be determined, wherein the means (130) is comprised of a wheel speed sensor or a wheel velocity sensor; and
- a correction means (140) for correcting the acceleration signals and the angular rate signals of the specific time period or the calculated driving state variables such that the calculated driving state variables correspond as closely as possible to the driving state variables determined from the additional sensor signals, wherein the device is designed to transfer the calculated driving state variables to a vehicle dynamic control.

8. The device according to claim 7, in which the driving state variables determined from the additional sensor signals correspond at least to one of the following: acceleration, velocity, position, angular rate and/or orientation of the vehicle.

9. The device according to one of the claims 7 to 8, which is designed additionally to perform a method according to the claims 3 to 6.

## Revendications

1. Procédé de détermination de l'état de conduite d'un véhicule dans l'espace tridimensionnel pour la régulation de la dynamique de conduite du véhicule, dans lequel le procédé comprend les étapes suivantes :
- détecter des premiers signaux sur une période de temps déterminée, qui se basent sur des premiers signaux de détecteur qui correspondent à l'accélération tridimensionnelle du véhicule ;
- détecter des deuxièmes signaux sur la période de temps déterminée, qui se basent sur des deuxièmes signaux de détecteur qui correspondent aux degrés de rotation tridimensionnels du véhicule :
- détecter les grandeurs de l'état de conduite, vitesse tridimensionnelle et orientation tridimensionnelle du véhicule, par intégration sur la période de temps déterminée des premiers signaux et des deuxièmes signaux selon le système d'équations de mouvement pour les grandeurs de l'état de conduite correspondantes ;
- détecter un ou plusieurs troisièmes signaux, qui se basent sur un ou plusieurs troisièmes signaux de détecteur supplémentaires d'un détecteur de vitesse de rotation de roue ou d'un détecteur de vitesse de roue, avec lesquels une ou plusieurs composantes des grandeurs de l'état de conduite détectées peuvent être déterminées ;
- corriger les premiers et les deuxièmes signaux de la période de temps déterminée ou des grandeurs de l'état de conduite détectées, de telle manière que les grandeurs de l'état de conduite détectées correspondent aussi exactement que possible aux grandeurs de l'état de conduite déterminées à partir des troisièmes signaux ; et
- utiliser les grandeurs de l'état de conduite détectées pour la régulation de la dynamique de conduite.

2. Procédé selon la revendication 1, dans lequel les grandeurs de l'état de conduite déterminées à partir des troisièmes signaux correspondent à au moins une des grandeurs suivantes: accélération, vitesse, position, degré de rotation et/ou orientation du véhicule.

3. Procédé selon l'une quelconque des revendications précédentes, dans lequel on détecte les grandeurs de l'état de conduite en un premier point du véhicule et, en se basant sur les grandeurs de l'état de conduite détectées pour ce premier point et en se basant sur des grandeurs de l'état de conduite connues d'un deuxième point du véhicule, on calcule la position relative du deuxième point par rapport au premier point.

4. Procédé selon l'une quelconque des revendications précédentes, dans lequel on identifie, à partir de l'écart entre la grandeur de l'état de conduite déterminée et la grandeur de l'état de conduite détectée, un défaut d'un premier détecteur et/ou d'un deuxième détecteur, d'où proviennent les premiers ou les deuxièmes signaux de détecteur.

5. Procédé selon l'une quelconque des revendications précédentes, dans lequel on détecte les grandeurs de l'état de conduite pour un état de conduite stable.

6. Procédé selon l'une quelconque des revendications précédentes, dans lequel on détecte en plus comme troisième grandeur de mesure des signaux qui se basent sur des signaux de détecteur, qui correspondent à l'orientation du véhicule par rapport au champ magnétique terrestre.

7. Dispositif de détermination de l'état de conduite d'un véhicule dans l'espace tridimensionnel pour la régulation de la dynamique de conduite, comprenant:
- un détecteur inertiel (110, 120), qui est conçu pour produire des signaux d'accélération, qui correspondent à l'accélération du véhicule dans l'espace tridimensionnel, et pour produire des signaux de degré de rotation, qui correspondent au degré de rotation du véhicule dans l'espace tridimensionnel;
- un moyen (140) pour détecter les grandeurs de l'état de conduite, la vitesse tridimensionnelle et l'orientation tridimensionnelle du véhicule par intégration, sur une période de temps déterminée, des signaux d'accélération et des signaux de degré de rotation selon le système d'équations de mouvement pour les grandeurs de l'état de conduite correspondantes;
- un moyen (130) pour émettre un ou plusieurs signaux de détecteur supplémentaires, avec lesquels une ou plusieurs composantes des grandeurs de l'état de conduite détectées peuvent être déterminées, dans lequel le moyen (130) comprend un détecteur de vitesse de rotation de roue ou un détecteur de vitesse de roue ; et
- un moyen de correction (140) pour corriger les signaux d'accélération et les signaux de degré de rotation de la période de temps déterminée ou les grandeurs de l'état de conduite détectées, de telle manière que les grandeurs de l'état de conduite détectées correspondent aussi exactement que possible aux grandeurs de l'état de conduite déterminées à partir des signaux de détecteur supplémentaires, dans lequel le dispositif est conçu pour transmettre les grandeurs de l'état de conduite détectées à une régulation de la dynamique de conduite.

8. Dispositif selon la revendication 7, dans lequel les grandeurs de l'état de conduite déterminées à partir des signaux de détecteur supplémentaires correspondent à au moins une des grandeurs suivantes: accélération, vitesse, position, degré de rotation et/ou orientation du véhicule.

9. Dispositif selon l'une des revendications 7 à 8, qui est en outre conçu pour exécuter un procédé selon l'une quelconque des revendications 3 à 6.
